# EUROPEAN PATENT APPLICATION

(11) **EP 4 056 347 A1**
(43) Date of publication of application: **14.09.2022**
(21) Application number: 22160498.6
(22) Date of filing: 07.03.2022
(51) Int. Cl.: B29C 45/14, B29C 51/00, B29C 51/12, B29C 51/26, B29C 67/24, B29C 69/00, B29C 70/78, B29K 75/00, B29K 311/10, B29K 511/10, B29K 711/00, B29K 711/10

(54) **METHOD FOR FORMING A COMPONENT IN NATURAL FIBER**

(30) Priority: 09.03.2021 IT 202100005432
(71) Applicant: Poltrona Frau S.P.A., 20821 Meda MB (IT)
(72) Inventor: Maiolo, Giovanni, 20821 Meda (MB) (IT)
(74) Representative: Capasso, Olga

(57) **Abstract**

A method (100) for forming a natural fiber component (10), comprising providing (S101) a natural fiber initial element (11), placing (S102) the initial element (11) inside a first mold (12) and forming an intermediate product (13) by compression through thermoforming, extracting (S103) the intermediate product (13) from the first mold (12), fixing (S104) the intermediate product (13) to a second mold (14) and applying (S105) a mixture of polymeric material on a portion of the intermediate component (13) by means of an injection molding process to form at least one structure (15) attached to said portion, opening (S106) the second mold (14) and extracting (S107) the finished component (10), wherein a first surface (16) of the component (10) is completely made by thermoforming and a second surface (17) of the component (10) comprises the structure (15) made by injection molding.

## Description

### TECHNICAL FIELD

The present invention relates to a method for forming a natural fiber component and to a component made by said method.

### PRIOR ART

A variety of technologies are known for manufacturing interior components in the automotive industry. These are chosen according to the use of the component and/or the material employed.

For example, a thermoplastic molding process is preferably used for painted or varnished interior components. In this case, a steel mold brought to high temperature and high pressure is used to transform granulates, such as ABS, PC, PC+PA6, PP, PEHD, or the like, into components having a first surface which is painted or varnished and a second surface which is fixed to the motorcar. The thickness of the component is determined by the characteristics of the mold, which is always a double steel mold of the male/female type with the hollow part inside which corresponds to the component to be made.

Indeed, the plastic material is made up of granules which, when brought to a high temperature, are injected at high pressure into the mold, filling its cavities.

Such a process is generally used to mass-produce low-cost components. However, the molds used are expensive and construction times are long.

Essentially, two other types of processes can be employed in the case of coated interior components, in addition to the molding process mentioned above. Thermoforming molding and reaction injection molding (RIM) .

Thermoforming uses steel or aluminum molds and dedicated ovens to heat sheets of materials, such as natural fiber, which is impregnated with polypropylene and can be laminated in layers of polypropylene, glass fabric, and resin. Alternatively, polyurethane or polyester is used, which is coupled/laminated with layers of polypropylene and glass fabrics. Alternatively, lastly, wood fiber is mixed with polypropylene to make compact sheets. These materials can produce components having a first surface, which is coated, and a second surface, which is fixed to the motorcar. The geometry and thickness of the component are constant and cannot be varied by the mold used. Such a process is generally used to produce medium-cost components. In this case, however, the machineries used are less expensive and mold construction time are less long than in the thermoplastic molding process.

Reaction injection molding (RIM) is a well-known process that uses a polyurethane injection system in which two components (polyol and isocyanate) are mixed under high pressure in an aluminum mold. Such a process may be adapted to produce components with specific technical characteristics which generally can have high costs. On the other hand, the machinery and molds used are less expensive than previous molding processes and the production times are roughly comparable.

Systems that combine some of these technologies are known in the literature. For example, the polypropylene back-injection process, in which a thermoforming step is followed by a component back-injection step, is known. In this case, the injection step can take place during the thermoforming step, when the component is still in the pressure mold, or later in a dedicated station. In both cases, low-cost components are obtained. However, the machinery used is extremely expensive and high investment is also required in terms of the production line and molds.

Therefore, it is an object of the present invention to provide a method for forming natural fiber components, which is more efficient and reduces total investment costs. Furthermore, it is an object of the present invention to provide a method for forming components, which can be made with specific technical characteristics and that at the same time perform better than components made by known techniques. Indeed, back-injection with polypropylene is much more expensive the weight being the same, has much longer equipment construction times, and has very little flexibility. Since polypropylene in granules is an unstable material in shrinkage, it will also have major constraints in terms of design and maximum thicknesses which can be filled and, being a material with problems of bonding coupling, it might be used only behind simple natural fibers based on the same polymer. Furthermore, polypropylene back-injection has a limitation due to the injectors used which are normally less than 1 kg maximum capacity.

### DESCRIPTION OF THE INVENTION

These purposes are achieved by a retractor according to the claims at the end of this description.

The method according to the present invention is adapted to forming a natural fiber component and comprises the step of providing an initial element made of natural fiber, preferably sheet-shaped, placing the initial element inside a first mold, and forming an intermediate product by compression through thermoforming.

The method further comprises the step of removing the intermediate product from the first mold, fixing the intermediate product to a second mold, and applying a polymeric material mixture to a portion of the intermediate component through an injection molding process, e.g., polyurethane by RIM, to form at least one structure fixed to said portion.

The method further comprises the step of opening the second mold and extracting the finished component.

The component obtained by the method according to the present invention has a first surface completely made by thermoforming and a second surface comprising the structure made by injection molding, e.g., polyurethane by RIM.

In other words, the method according to the present invention is a two-step process for making two surfaces of the same component. Thermoforming is used for the outer surface which must possibly be coated using thermocompression of natural fiber materials (in sheet or plate form). The fiber density can be modified to vary the strength, elongation, and weight of the component. The use of natural fiber involves the possibility of obtaining very light and adaptable to various shapes components. Once the surface is made by thermoforming, the component is fixed to a second mold for the injection molding process and the formation of the structure attached to the second surface of the component. It is worth noting that the second mold is different from the first mold used for thermoforming and which is used to inject a polymer mixture inside specific cavities to define the back (the rear surface) of the component. Also in this case, the density of the mixture can be changed to vary the strength, elongation, and weight of the component.

Typically, these two technologies, which comprise the two steps of the method according to the present invention, are used to make different components, or rather to make components addressed to different suppliers. Indeed, in the automotive sector, the natural fiber thermoforming is commonly used for making automotive components with medium-high production volumes and thus for large suppliers, while polyurethane injection molding by RIM, such as reaction back-injection, is commonly used for making automotive components with low production volume and thus for small suppliers. Therefore, these two technologies are used separately and never combined with each other to make a single component. It is worth noting that over the last fifteen years there has been a constant growth in volumes, so that all the main suppliers of automotive components have turned to technologies, which, following major investments, allowed a very low cost per component. Thermoplastic molding and compression thermoforming molding are certainly among them. In contrast, small productions in the luxury sectors or truck or agricultural sectors are often still made using RIM. Therefore these are two technologies that have very different supply chains and application sectors between them, and only now with the great growth of luxury, of customizations intermediate sales volumes are being created that require new solutions.

Advantageously, the method according to the present invention can be used to make components, e.g., for car interiors, which show a significant weight reduction and at the same time allow a reduction in production process investments. Furthermore, the present method makes it possible to eliminate a step of assembly, e.g., to make the structure on the rear surface. Another major advantage of the dual technology is that the breakdown of the component into the two steps can also make it possible in some cases to eliminate geometric undercuts notoriously very expensive to make. In particular, this method may be suitable for the manufacturing of components in the luxury automotive segment with a low production volume.

According to an embodiment, the natural fiber may comprise a thermoplastic polymer material or a thermosetting polymer material. In the case of thermoplastic material, the first mold may have a temperature of less than 40°C and the sheets are brought to temperatures of 150°C to 250°C. In the case of thermosetting material, single or sandwich (polyester plus glass or polyurethane + glass) cold materials can be inserted into the first mold. However, the first mold can be heated to a temperature between 120°C and 130°C so the material will temper and solidify while staying in the first mold as if it was a cooking. The advantage of thermosetting is that it is possible to make components in which changing the thickness of the mold cavity of the various zones changes its density, and thus the mechanical characteristics, in a localized manner. Therefore, it is possible to have a single component with lighter zones and heavier zones according to the end purpose.

According to an embodiment that can be combined with the previous embodiments, the second mold is made of aluminum. In this manner, the components can be manufactured at a lower cost.

According to an embodiment, which can be combined with the previous embodiments, the injection molding process is reinforced reaction injection molding (RRIM). In this manner, it is possible to obtain components which are lighter and strong at the same time.

RRIM not only offers the possibility of being less expensive and faster to start up, but it also offers the possibility of changing its characteristics a lot by also using very different materials, depending on the required application. Therefore, we have a material which guarantees adhesion, lightness, and thicknesses which can vary a lot depending on the needs, thus creating components which can range from a few hectograms to several kilograms.

According to an embodiment combinable with the preceding embodiments, following the step of extracting the intermediate product from the first mold and before fixing the intermediate product to the second mold, the method further comprises the step of finishing the edges of the intermediate product by means of a cutting process. Once the intermediate product is formed by thermoforming and once stabilized, the first mold opens and the product can be taken to the cutting processing area. If a mold (third mold) which includes the blank is used, it is made of steel. However, if we opt for water or laser cutting, then a simple aluminum mold (third alternative mold) can be used. Once the trimmed part is obtained, it is fixed to the second mold for the injection molding process.

According to an embodiment, compression by thermoforming can occur at a temperature comprised between 120°C and 250°C. In particular, the second mold may be held at a temperature comprised between 50°C and 70°C, preferably at 60°C. In particular, the injection molding process can take place at a pressure comprised between 120 and 200 Bar. The components that make up the polymeric material mixture have a temperature comprised between 20 °C and 50 °C. The mixture can be applied for a time comprised between 1 second and 30 sec. Furthermore, the applied mixture of polymeric material may comprise polyurethane material having a final density comprised between 0.55 kg/dm³ and 1.30 kg/dm³. The processing parameters of the dual technology vary according to the materials used and to their combinability.

The component according to the present invention, preferably a motorcar interior component, is made of natural fiber and is manufactured by means of the method according to one of the preceding embodiments. The component comprises a front surface made by the thermoforming process and a rear surface having a structure made by the injection molding process, preferably by reinforced reaction injection molding (RRIM) .

Advantageously, the component according to the present invention is lighter than the components produced by known processes without however missing the necessary resistance. Furthermore, the component is presented as a single element, i.e., natural fiber component plus polyurethane structure, without the need for an assembly process. Furthermore, being able to inject the polyurethane only in the desired areas in the complex there will be a component that will be thinner, leaving to the design and to the problems of encumbrance/interference much flexibility and few constructive constraints.

These and other aspects of the present invention will be more apparent in light of the following description of some preferred embodiments described below.

Fig. 1 shows a schematic representation of a system used to make the method according to an embodiment of the invention.

Fig. 2 shows a flow chart of the method according to an embodiment of the invention.

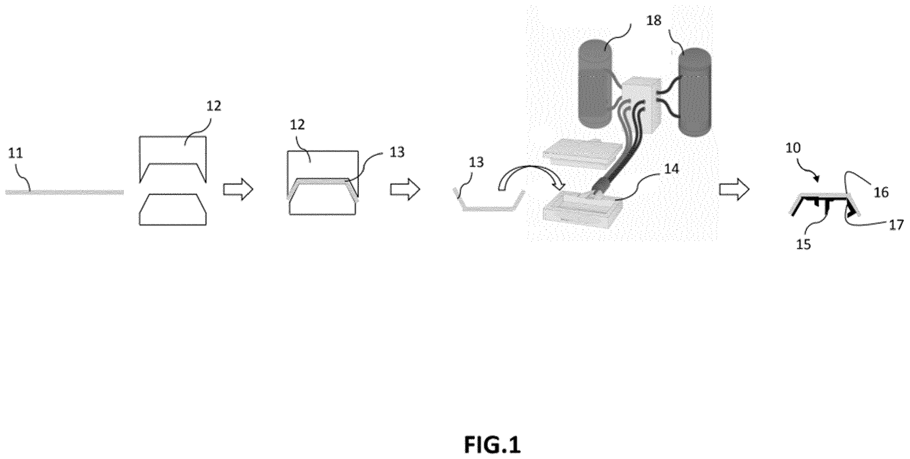

Figure 1 shows an embodiment of a car interior component 10 according to the method 100 of the present invention. An initial sheet-shaped element 11 is placed within a first mold 12 used for a thermoforming process. For example, the thermoplastic sheets (with or without mechanical manipulator) containing natural fiber are loaded in a production line with heating oven and compression press. For example, the sheet 11 slides on a mesh belt into the oven (not shown in the figure), which heats the sheet 11 with ceramic or infrared heating elements. The sheet 11 is inserted into the first open mold 12 positioned in the press once the optimum temperature, which depends on the materials and can vary between 150°C and 250°C, has been reached. The press closes and the part is thermoformed by compression. For the shape to be stable, the part may undergo a standing time in the closed mold of, e.g., 1-3 minutes.

After opening the first mold 12, an intermediate product 13 is obtained which, following a cutting process (not shown in the figure), is fed into a second mold 14 for the injection molding process, in particular RRIM.

Through the RRIM process, polyurethane is injected which will form a structure 15 on the portion of the rear surface 17 where required by the mold 14. In this case, the second mold 14 is made of aluminum and placed at a temperature of 60°C. The two materials isocyanate and polyol, which make up the polyurethane, are inside two containers 18 and are mixed directly in the injection head fixed on the second mold 14. The injection time can vary between 1 and 30 seconds according to the standard materials, and after about 1-5 minutes the second mold 14 can be opened and the finished component 10 removed. The component 10 comprises a first surface 16 completely made by thermoforming and a second surface 17 having the structure 15 made by the reinforced reaction injection molding process.

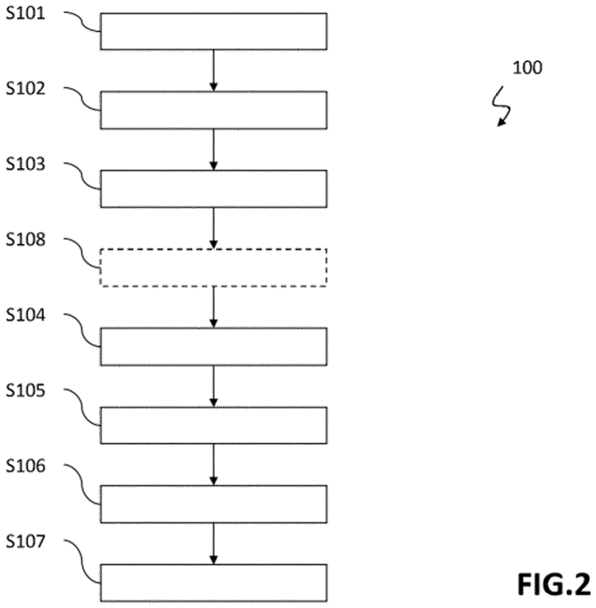

Figure 2 schematically shows the steps of the method 100 according to the present invention. An initial element 11 made of natural fiber is provided in step S101. This is placed within a first mold 12 to form an intermediate product 13 with compression by thermoforming (step S102). In step S103, the intermediate product 13 is extracted from the first mold 12 and fixed(step S104)to a second mold 14.

In step S105, a mixture of polymeric material is applied on a portion of the intermediate component 13 by means of an injection molding process to form at least one structure 15 attached to said portion. Finally, the second mold 14 is opened in step S107 and the finished component 10 extracted.

The edges of the intermediate product 13 may be finished by a cutting process (step S108) between step S103 and step S104.

To satisfy further particular needs, a person skilled in the art may make various further changes and variants to the above described method, all of which are comprised in the scope of protection of the present invention as defined in the enclosed claims.

## Claims

1. Method (100) for forming a component (10) in natural fiber, the method comprising:
providing (S101) an initial element (11) in natural fiber, preferably in the form of a sheet;
placing (S102) the initial element (11) inside a first mold (12) and forming an intermediate product (13) by compression through thermoforming;
extracting (S103) the intermediate product (13) from the first mold (12);
fixing (S104) the intermediate product (13) to a second mold (14);
applying (S105) a mixture of polymeric material on a portion of the intermediate component (13) by means of an injection molding process, preferably polyurethane in RIM, to form at least one structure (15) attached to said portion;
opening (S106) the second mold (14); and
extracting (S107) the finished component (10),
wherein a first surface (16) of the component (10) is completely made by thermoforming and a second surface (17) of the component (10) comprises the structure (15) made by injection molding.

2. Method (100) according to claim 1, wherein the natural fiber comprises a thermoplastic polymer material or a thermosetting polymer material.

3. Method (100) according to one of the preceding claims, wherein the second mold (14) is made of aluminum.

4. Method (100) according to one of the preceding claims, wherein the injection molding process is a reinforced reaction injection molding (RRIM).

5. Method (100) according to one of the preceding claims, wherein the compression by thermoforming takes place at a temperature comprised between 120 °C and 250 °C.

6. Method (100) according to one of the preceding claims, wherein following the step of extracting (S103) the intermediate product (13) from the first mold (12) and before fixing (S104) the intermediate product (13) to the second mold (14), the method further comprises the step of finishing (S108) the edges of the intermediate product (13) by means of a cutting process.

7. Method (100) according to one of the preceding claims, wherein the second mold (14) is held at a temperature comprised between 50 °C and 70 °C, preferably at 60 °C.

8. Method (100) according to one of the preceding claims, wherein the injection molding process takes place at a pressure comprised between 120 and 200 Bar, wherein the components which constitute the mixture of polymeric material have a temperature comprised between 20 °C and 50 °C and wherein said mixture is applied for a time comprised between 1 sec and 30 sec.

9. Method (100) according to one of the preceding claims, wherein the applied mixture of polymeric material comprises polyurethane material having a final density comprised between 0.55 Kg/dm³ and 1.30 Kg/dm³.

10. Component (10) in natural fiber, preferably component for automotive interiors, realized by the method (100) according to one of the preceding claims, wherein the component (10) comprises a front surface (16) realized by the process of thermoforming and a back surface (17) having a structure (15) realized by the injection molding process, preferably by a reaction reinforced injection molding (RRIM).
